(19) **Europäisches Patentamt / European Patent Office / Office européen des brevets**

(11) **EP 4 706 901 A1**

(12) **EUROPEAN PATENT APPLICATION**

(43) Date of publication:
**11.03.2026 Bulletin 2026/11**

(51) International Patent Classification (IPC):
**B25J 9/16** *(2006.01)*

(21) Application number: **24198635.5**

(52) Cooperative Patent Classification (CPC):
**B25J 9/163; B25J 9/1697;** G05B 2219/40323;
G05B 2219/40499; G05B 2219/40607

(22) Date of filing: **05.09.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Ngo, Anh Vien**
**72147 Nehren (DE)**
• **Le, Bao Huy**
**72070 Tuebingen (DE)**
• **Gabriel, Miroslav**
**80809 Muenchen (DE)**

Remarks:
Amended claims in accordance with Rule 137(2)
EPC.

(54) **METHOD OF REINFORCEMENT LEARNING OF A SOFT ACTOR-CRITIC ROBOT CONTROL MODEL FOR NON-PREHENSILE MANIPULATION OF AN OBJECT**

(57) Various aspects relate to a method (200) of reinforcement learning a soft actor-critic robot control model (302) for manipulation of an object, wherein an actor (320) of the soft actor-critic robot control model (302) includes a motion parameter policy for determining, for each point of an object-representing point cloud (306), a motion parameter indicating how to move the object when being contacted at the point and includes a location policy for determining which point of the object-representing point cloud (306) is to be contacted, wherein the method includes a training of the soft actor-critic robot control model (302) using both, an entropy of the motion parameter policy and an entropy of the location policy at each point of the object-representing point cloud (306).

Fig. 3

**Description**

Prior Art

Reinforcement learning allows to learn a policy for prehensile and non-prehensile manipulation of objects by a robot. However, learning the policy for non-prehensile object manipulation (viz. manipulating an object without grasping it) in hybrid action spaces, which include discrete actions (such as contacting an object at a contact location) as well as continuous actions (such as moving (e.g., pushing) the contacted object to another position), is challenging.

W. Zhou, et al.: "HACMan: Learning hybrid actor-critic maps for 6d non-prehensile manipulation", 7th Conference on Robot Learning (CoRL 2023), Atlanta, USA (in the following referred to as reference [1]) and Z. Feldman et al.: "A hybrid approach for learning to shift and grasp with elaborate motion primitives", International Conference on Robotics and Automation (ICRA) 2022, Philadelphia, USA (in the following referred to as reference [2]) describe a non-prehensile object manipulation scenario in which a discrete action is selected along with a continuous action from a hybrid action space.

Disclosure of the Invention

The present disclosure relates to a method of reinforcement learning of a (hybrid) soft actor-critic robot control model for object manipulation.

According to various embodiments, the (computer-implemented) method of reinforcement learning of the (hybrid) soft actor-critic for (non-prehensile) manipulation of an object includes: receiving data representing a (e.g., 6D) point cloud which represents a surrounding of a robotic device, wherein a plurality of points of the point cloud represents the object (which is to be manipulated by the robotic device), the data further representing a target location of the object; for each point of the plurality of points: determining (e.g., predicting), using a motion parameter policy of an actor of the soft actor-critic robot control model, a respective (continuous) motion parameter indicating how to move the object when being contacted at the point, determining (e.g., predicting), using the respective motion parameter and one or more (a pair of) state-action (Q) value functions of a critic of the soft actor-critic robot control model, a respective state-action (Q) value indicating a predicted reward when moving the object from the point according to the respective motion parameter, determining, using the respective state-action (Q) value and a location policy of the actor, a respective (contacting) probability that the object is to be contacted at the point by the robotic device; determining a reward (and a next state) in response to controlling the robotic device to contact the object at the (discrete contact) point of the plurality of points having the greatest respective (contacting) probability and moving the object in accordance with the respective motion parameter associated with this point; determining an actor loss value using the respective state-action (Q) value, an entropy of the motion parameter policy, and an entropy of the location policy at each point of the plurality of points; adapting (e.g., updating) the motion parameter policy and the location policy using the actor loss value; determining a critic loss value using the (determined) reward, the entropy of the motion parameter policy, and the entropy of the location policy at each point of the plurality of points; and adapting (e.g., updating) the one or more state-action (Q) value functions of the critic using the second loss value.

The above method takes the entropy of the location policy as well as the entropy of the motion parameter policy into account during reinforcement learning of the soft actor-critic robot control model, whereby an exploration is improved (e.g., increased) for both, discrete actions (such as contacting the object at a contact point) and continuous actions (such as moving the contacted object) during reinforcement learning.

Neither reference [1] nor reference [2] consider an exploration of the location policy. In particular, reference [1] uses a Twin Delayed Deep Deterministic Policy Gradient (TD3) limiting the exploration to a simple $\varepsilon$-greedy strategy over a continuous action parameter space; and reference [2] uses a Soft Actor-Critic (SAC) approach, but limited to an exploration of the motion policy.

In the following, various examples are described.

Example 1 is the method of reinforcement learning of the soft actor-critic as described above.

In Example 2, the subject matter of Example 1 can optionally include that a diffusion (probabilistic) model provides the motion parameter policy, the diffusion model being configured to determine (e.g., predict) the respective (continuous) motion parameter as a denoising sequence of consecutive motion parameters.

Using the diffusion model allows to learn diverse behaviors (by means of diverse policies), thereby improving skill transfer and/or generalization to out-of-distribution scenarios and (during training) unseen objects.

In Example 3, the subject matter of Example 2 can optionally include that the entropy of the motion parameter policy at a respective point of the plurality of points is determined as a sum of respectively determined entropies of each motion parameter of the denoising sequence of consecutive motion parameters.

Considering the respective entropy at each denoising step of the denoising process further increase the exploration during reinforcement learning.

In Example 4, the subject matter of Example 2 or 3 can optionally include that the diffusion model is configured to determine a respective variance for each motion parameter of the denoising sequence of consecutive motion parameters; wherein, when determining the actor loss value and/or the critic loss value, the entropy of the motion parameter policy is weighted according to a weight coefficient; wherein the method further includes: adapting the weight coefficient using the respective variance of each motion parameter of the denoising sequence of consecutive motion parameters.

This allows to adapt the exploration with respect to an uncertainty of the motion policy, thereby further improving the exploration behavior during reinforcement learning.

In Example 5, the subject matter of any one of Examples 1 to 4 can optionally include that the actor loss value decreases with increasing entropy of the motion parameter policy and increasing entropy of the location policy; and/or wherein the critic loss value decreases with increasing entropy of the motion parameter policy and increasing entropy of the location policy.

Illustratively, the reinforcement learning may employ an entropy increase (e.g., entropy maximization), thereby increasing the exploration behavior in both, discrete actions as given by the location policy and continuous actions as given by the motion policy.

In Example 6, the subject matter of any one of Examples 1 to 5 can optionally include that the actor loss value and/or the critic loss value are determined using a (e.g., weighted) sum of the entropy of the motion parameter policy and the entropy of the location policy at each point of the plurality of points.

Example 7 is a robot device controller configured to carry out the method of any one of Examples 1 to 6.

Example 8 is a robot device including: the robot device controller according to Example 7; and at least one perception sensor (e.g., a depth camera) configured to acquire the data representing the point cloud.

Example 9 is a computer program including instructions which, when executed by a computer, causes the computer to carry out the method according to any one of Examples 1 to 6.

Example 10 is a computer-readable medium including instructions which, when executed by a computer, causes the computer to carry out the method according to any one of Examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robotic device arrangement according to various aspects;
Figure 2 shows a flow diagram of a method of reinforcement learning of a soft actor-critic robot control model according to various aspects;
Figure 3 and Figure 4 each schematically show a configuration of the soft actor-critic robot control model according to various aspects; and
Figure 5 shows an exemplary use case of the learned soft actor-critic robot control model.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

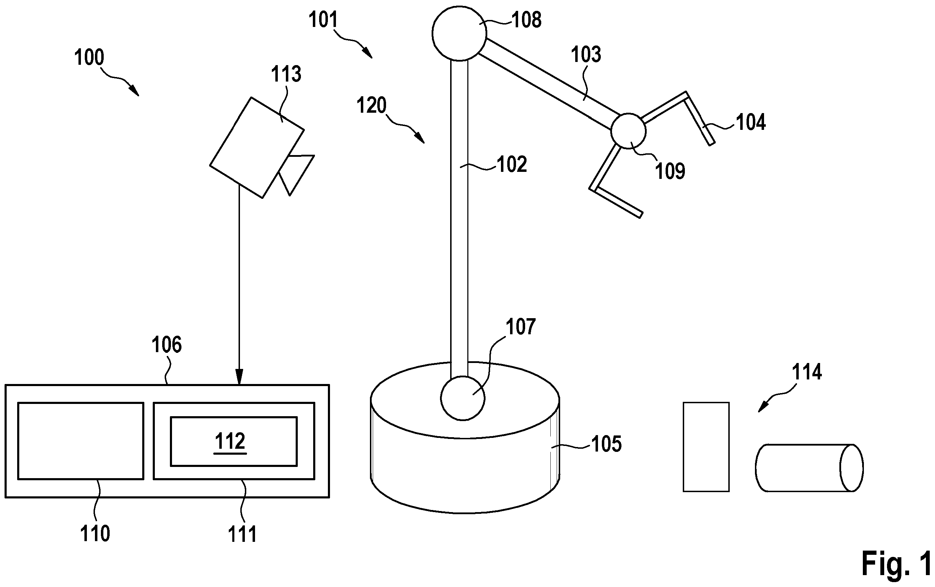

**FIG.1** shows a robotic device arrangement 100 according to various aspects. The robotic device arrangement 100 may include a robotic device 101 (short: robot). The robotic device 101 shown in FIG.1 and described below by way of example is an exemplary robotic device serving for illustration and may include, for example, an industrial robot in the form of a robot arm 120 for moving, assembling or machining a workpiece, for bin-picking, etc. It is noted that this robotic device serves for illustration and may, in general, be any type of computer-controlled device, such as a robot (e.g., a manufacturing robot, a maintenance robot, a domestic robot, a medical robot, etc.), a vehicle (e.g., an autonomous vehicle), a domestic appliance, a production machine, a personal assistant, an access control system, etc., as well as any other type of robotic device.

The robot arm 120 may include manipulators 102, 103, 104 and a base (or generally a support) 105 by which the manipulators 102, 103, 104 are supported. The term "manipulators " may refer to the movable parts of the robotic device 101 whose actuation enables physical interaction with the environment, e.g. to carry out a task, e.g. to carry out or more skills of the robotic device 101.

For control of the robotic device 101, the robotic device arrangement 100 may include a (robot) controller 106 configured to implement the interaction with the environment according to a control program. The last manipulator 104 (furthest from the support 105) of the manipulators 102, 103, 104 is also referred to as end-effector 104. The type of end-effector 104 may define, whether the robotic device 101 is capable for a non-prehensile and/or prehensile object manipulation. A prehensile object manipulation may refer to a manipulation of an object with grasping the object, whereas a non-prehensile object manipulation may refer to a manipulation of an object without grasping the object. Thus, the robotic device 101 may be capable for a prehensile object manipulation in the case that the end-effector 104 includes at least one grasping tool, such as a gripping tool (as exemplarily illustrated in FIG.1) and/or a suction device (e.g. a suction head). In either case, the robotic device 101 may be capable for a non-prehensile object manipulation, e.g., by pushing the object (without grasping it), to, for example, change its lateral position, its orientation, etc.

The other manipulators 102, 103 (closer to the support 105) may form a positioning device such that, together with the end-effector 104, the robot arm 120 with the end-effector 104 at its end is provided. The robot arm 120 may be a mechanical arm that can provide similar functions as a human arm (which can carry out non-prehensile object manipulation, such as holding an object on a hand or pushing an object using a hand or an arm, as well as prehensile object manipulation, such as grasping objects using the hands).

The robot arm 120 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator may implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 may include one or more processors 110 and a memory 111 storing code and data based on which the processor 110 controls the robot arm 120. According to various embodiments, the controller 106 controls the robot arm 120 on the basis of a robot control model (e.g. a robot control model trained as detailed herein) 112 stored in the memory 111.

As an example, the robot's prehensile task is to perform bin-picking, i.e. grasp an object of multiple objects 114 (wherein grasping also includes picking up the object 114 with a suction cup) and, for example, show the object 114 to a scanner or move the object 114 to another bin. For robot motion planning (viz. to be able to determine the object 114 to pick up, to determine a suitable grasping location on the object 114, and to determine a suitable trajectory according to which the object 114 is moved), the controller 106 may use images of the robot's workspace where the objects 114 are located. To be able to determine the suitable grasping location and the suitable trajectory in a current scenario, the controller 106 employ a dynamics model that is capable to predict an image of the robot's surrounding in the case that the robot would carry out a specific (vision-based) control action (e.g., as part of a control task).

As another example, the robot's non-prehensile task is to push an object of multiple objects 114 to another location and/or change an orientation of the object. In robot motion planning a suitable contact position at which the object 114 is to be contacted and/or a suitable trajectory according to which the object 114 is moved, may be determined using the images of the robot's workspace where the objects 114 are located. To be able to determine the suitable contact location and the suitable trajectory in a current scenario, the controller 106 employ a dynamics model that is capable to predict an image of the robot's surrounding in the case that the robot would carry out a specific (vision-based) control action (e.g., as part of a control task).

The images of the surrounding of the robotic device may be provided by one or more imaging sensors 113 (e.g., attached to the robot arm 120 or in any other way such that the controller 106 may control the viewpoint of the one or more imaging sensors 113). To be able to determine the object 114 to pick up and to determine a suitable grasping location on the object 114, the controller 106 may use images of the robot's workspace where the objects 114 are located.

An imaging sensor, as used herein, may be, for example, a camera (e.g., a standard camera, a digital camera, an infrared camera, a stereo camera, etc.), a radar sensor, a LIDAR sensor, an ultrasound sensor, etc. Thus, an image may be an RGB image, an RGB-D image, or a depth image (also referred to as a D image). A depth image described herein may be any type of image that includes depth information. Illustratively, a depth image may have 3-dimensional information about one or more objects. For example, a depth image described herein may include a point cloud provided by a LIDAR sensor and/or a radar sensor. For example, a depth image may be an image with depth information provided by a LIDAR sensor.

The controller 106 may be configured to control the robot arm 120 based on an output of the robot control model 112.

The robot control model 112 may allow for a non-prehensile manipulation of objects 114 using non-prehensile manipulation policies. Non-prehensile object manipulation can enable more complex interactions with objects, but it also presents challenges in reasoning about robot-object interactions and dealing with the complexities introduced by learning diverse behaviors. Thus, non-prehensile object manipulation leads to complex contact events among the robot, the object, and the environment (viz. the surrounding of the robot) and, hence, poses challenges to state-estimation, planning, and control.

Various aspects detailed herein refer to a method of learning the robot control model 112 by reinforcement learning (RL).

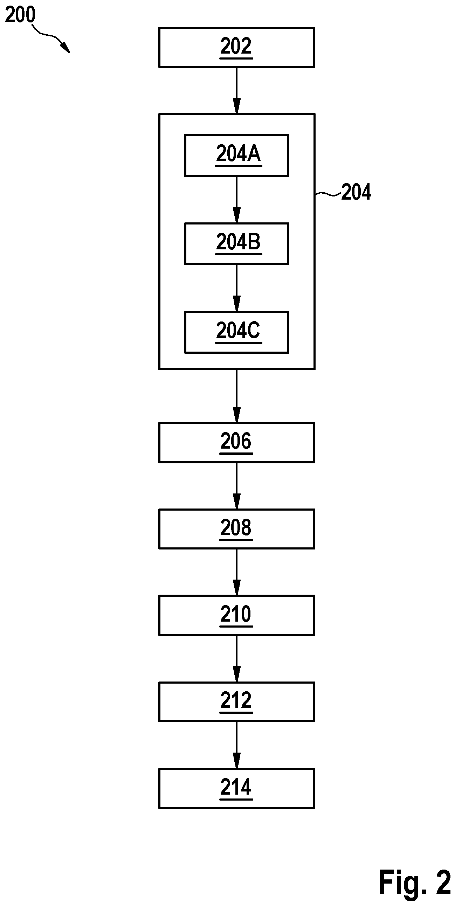

**FIG.2** shows a flow diagram of a (computer-implemented) method 200 of reinforcement learning of a soft actor-critic robot control model according to various aspects.

The method 200 may include (in 202) receiving data representing a (e.g., 6D) point cloud which represents a surrounding of a robotic device. A plurality of points of the point cloud may represent the object which is to be manipulated by the robotic device. The data may further represent a target location of the object.

The method 200 may include (in 204) for each point of the plurality of points:

- determining (e.g., predicting), using a motion parameter policy of an actor of the soft actor-critic robot control model, a respective (continuous) motion parameter indicating how to move the object when being grasped at the point (in 204A);
- determining (e.g., predicting), using the respective motion parameter and one or more (a pair of) state-action (Q) value functions of a critic of the soft actor-critic robot control model, a respective state-action (Q) value indicating a predicted reward when moving the object from the point according to the respective motion parameter (in 204B); and
- determining, using the respective state-action (Q) value and a location policy of the actor, a respective (grasping) probability that the robotic device is to grasp the object at the point (in 204C).

The method 200 may include (in 206) determining a reward in response to controlling the robotic device to grasp the object at the (discrete contact) point of the plurality of points having the greatest respective (grasping) probability and moving the object in accordance with the respective motion parameter associated with this point.

The method 200 may include (in 208) determining an actor loss value using the respective state-action (Q) value, an entropy of the motion parameter policy, and an entropy of the location policy at each point of the plurality of points.

The method 200 may include (in 210) adapting (e.g., updating) the motion parameter policy and the location policy using the actor loss value.

The method 200 may include (in 212) determining a critic loss value using the (determined) reward, the entropy of the motion parameter policy, and the entropy of the location policy at each point of the plurality of points.

The method 200 may include (in 214) adapting (e.g., updating) the one or more state-action (Q) value functions of the critic using the second loss value.

In the following, various aspects of the method 200 are described in further detail.

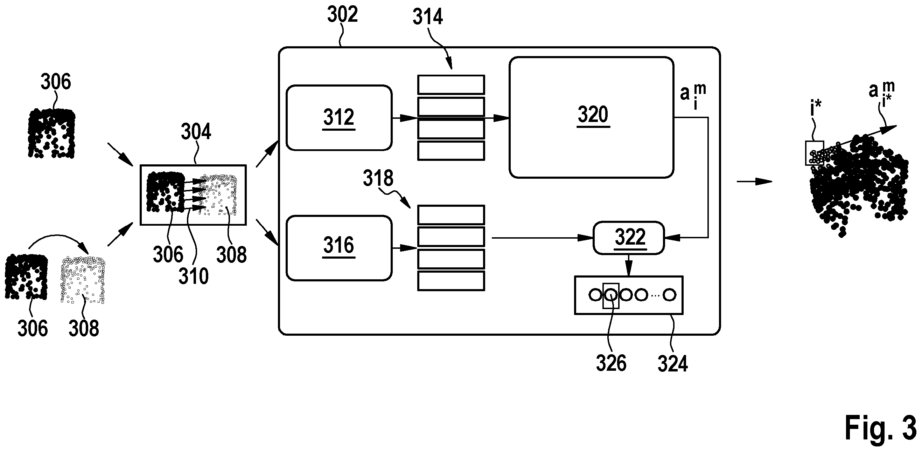

**FIG.3** shows an exemplary configuration of the soft actor-critic robot control model 302 according to various aspects.

As detailed herein, in 202, the data 304 representing the point cloud of the (current) surrounding of the robotic device 101 and representing the target location of the object may be received. The data 304 may include a current point cloud 306 of the current surrounding of the robotic device 101 and a target point cloud 308 of a desired surrounding. Thus, the target point cloud 308 may indicate how each point of the current point cloud 306 shall be shifted. The data 304 may include a (1-dimensional) segmentation mask which segments the current point cloud (representing a scene X) into the object ($X_{obj}$) that is to be manipulated and background thereof (e.g., background objects ($X_b$)). This allows to focus the learning of the point-wise policies detailed herein on the (relevant) points of the object only, thereby reducing the computational cost. According to various aspects, the data 304 may include a (3-dimensional) goal flow vector 310 that includes a respective vector for each point of the plurality of points that are associated with the object (according to the segmentation mask) and this respective vector may indicate the change to be applied to this point. With this, the dimension of the input data can be reduced from 7 (having the 3-dimensional current point cloud, the 3-dimensional target point cloud, and the 1-dimensional segmentation mask) to 4 (having the 3-dimensional goal flow vector and the 1-dimensional segmentation mask), thereby (further) reducing the computational cost. The one or more imaging sensors 113 may include at least one imaging sensor configured to acquire the current point cloud 306 (e.g., a LIDAR sensor and/or a radar senor and/or a depth camera).

The actor-critic robot control model 302 may include at least one feature encoder, $f(X) = \{f_i \mid i = 1 \ldots N\}$, 312, 316 configured to extract features, $f_i$, 314, 318 for each point, $i$, of the plurality of ($N$) points (with $N$ being any integer number greater than one).

The at least one feature encoder may include a first feature encoder 312 configured to extract respective actor features, $f_{a,i}$, 314 for each point, $i$, of the plurality of ($N$) points. The at least one feature encoder may include a second feature encoder 316 configured to extract respective critic features, $f_{c,i}$, 318 for each point, $i$, of the plurality of ($N$) points. In some aspects, the at least one feature encoder may only include one feature encoder providing the first feature encoder 312 and the second feature encoder 316. The extract features, $f_i$, 314, 318 may include a current state, $s_t$.

The actor-critic robot control model 302 may include an actor 320 and a critic 322. The actor 320 may include a (point-wise) location policy, $\pi^{loc}$, and a (point-wise) motion parameter policy, $\pi^m$. A (hybrid) actor policy, $\pi_\theta$, may include the location policy, $\pi^{loc}$, and the motion parameter policy, $\pi^m$. According to various aspects, the actor-critic robot control model 302 is an off-policy actor-critic robot control model 302 that decouples the policy used to generate data from the policy being optimized. The actor, represented by the policy $\pi_\theta(a \mid s)$ with parameters $\theta$, selects actions based on the current state. The critic with parameters $\phi$ estimates the value functions $Q^\phi(s, a)$.

The motion parameter policy, $\pi^m$, may determine, for each point, $i$, of the plurality of ($N$) points, a respective motion parameter, $\boldsymbol{a}_i^m$, that indicates how to move the object when being contacted at that point, $i$. Illustratively, a motion parameter map $\boldsymbol{a}^m = \{\boldsymbol{a}_i^m = \pi^m(f_i) \mid i = 1 \dots N\}$ may include the respective motion parameter, $\boldsymbol{a}_i^m$, of all points $i \dots N$.

The critic 322 may include one or more state-action value functions $\{Q_\phi(f_i, \boldsymbol{a}_i^m) \mid i = 1 \dots N\}$ (e.g., a pair of state-action value functions $Q_\phi = Q_{\phi_1} + Q_{\phi_2}$ as detailed in reference [1]). A state-action value function $Q_\phi(f_i, \boldsymbol{a}_i^m)$ may be configured to determine a respective state-action value, $Q_i$, for each point, $i$, of the plurality of ($N$) points, using the respective critic features, $f_{c,i}$, 318 and the respective motion parameter, $\boldsymbol{a}_i^m$, associated with that point, $i$. Illustratively, a critic map $Q = \{Q_i = Q_\phi(f_i, \boldsymbol{a}_i^m) \mid i = 1 \dots N\}$, 324 may include may include the respective state-action value, $Q_i$, of all points $i \dots N$.

The location policy, $\pi^{loc}$, of the actor 320 may determine, for each point, $i$, of the plurality of (N) points, a respective probability that the object is to be contacted at that point, $i$, by the robotic device 101. Illustratively, a location map, $\boldsymbol{a}^{loc}$, may include the respective probability of all points $i \dots N$. The location map, $\boldsymbol{a}^{loc}$, may indicate how likely the robotic device 101 should apply action at a respective contact point, $i$.

Then the point 236 of the plurality of points having the greatest respective probability (viz. the highest likelihood) may be selected. According to various aspects, the location policy, $\pi^{loc}$, may determine the respective probability of a point, $i$, by equation (1):

$$\pi_{\mathrm{loc}}(x_i \mid \mathcal{X}) = \frac{\exp(\beta Q_i)}{\sum_{k=1..N} \exp(\beta Q_k)} \tag{1},$$

where $\beta$ is a softmax temperature.

In 206, the robotic device 101 may be controlled to contact the object at the selected point, $i^*$, 326 and to move the object in accordance with the respective motion parameter, $\boldsymbol{a}_{i*}^m$, associated with the selected point 326. Then, a reward, $r$, is determined (indicating whether the target point cloud 308 is achieved or not). Further, the next state, $s_{t+1}$, may be determined.

Then, the location policy, $\pi^{loc}$, the motion parameter policy, $\pi^m$, and the one or more state-action value functions $Q_\phi$ may be adapted (as part of RL).

In a first exemplary configuration, the actor 320 may be a consistency model $f_\theta(\boldsymbol{s}, \boldsymbol{a}^\tau, \tau)$ as policy representation, where actions can be sampled as $\pi_\theta(\boldsymbol{s}) = $ Consistency_Inference $(\boldsymbol{s}, f_\theta)$.

According to a hybrid Soft Actor-Critic (HySAC) approach detailed herein, a cumulative reward may be optimized together with an entropy of the policy by:

$$J(\pi) = \sum_t \mathbb{E}_{s_t, a_t}[r(\boldsymbol{s}_t, \boldsymbol{a}_t) - \alpha \log \pi(\boldsymbol{a}_t \mid \boldsymbol{s}_t)]$$

Given a current point cloud state $s = X$, a (per-point) actor loss may be determined using an entropy, $\pi_i^{\mathrm{loc}}(x_i \mid s)$, of the location policy, $\pi^{loc}$, and an entropy, $\log \pi_i^{\mathrm{m}}(\boldsymbol{a}_i^m \mid s)$, of the motion parameter policy, $\pi^m$, (at each point, $i$, of the plurality of ($N$) points). The actor loss term, $J_i(\theta)$, may be determined by:

$$J_i(\theta) = -Q_\phi(f_i, \boldsymbol{a}_i^m) + \alpha \log \pi_{\theta,i}(x_i, \boldsymbol{a}_i^m \mid s),$$

where $\alpha$ is a coefficient defining a weight between entropy and reward (thereby a weighting between exploration and exploitation). The entropy term $\alpha \log \pi_{\theta,i}(x_i, \boldsymbol{a}_i^m \mid s)$ may be decomposed as a sum of the location policy's entropy

$\alpha_1 \log \pi_i^{\text{loc}}(x_i \mid s)$ and the motion parameter's entropy $\alpha_2 \log \pi_i^{\text{m}}(a_i^m \mid s)$ (viz. $\alpha \log \pi_{\theta,i}(x_i, a_i^m \mid s) = \alpha_1 \log \pi_i^{\text{loc}}(x_i \mid \quad s) + \alpha_2 \log \pi_i^{\text{m}}(a_i^m \mid s)$ with $\alpha_1$ and $\alpha_2$ defining a weighting between an exploration of the (continuous) motion parameter and an exploration of the (discrete) contact location).

The total objective of the actor 320 may be

$$J_\pi(\theta) = \sum_i^N \pi^{\text{loc}}(x_i \mid s) J_i(\theta) \tag{2}$$

Thus, the actor loss (value), $L_{\text{actor}}(\theta)$, may be determined by

$$L_{\text{actor}}(\theta) = -\mathbb{E}_{s_t \sim \mathcal{D}, a_t \sim \pi_\theta(s_t)} \left[ Q_\phi(f_i, a_i^m) + \alpha \log \pi_{\theta,i}(x_i, a_i^m \mid s) \right]$$

A critic loss (value), $L_{\text{critic}}(\phi)$, may be determined by

$$L_{\text{critic}}(\phi) = \frac{1}{2} \mathbb{E}_{s_t, a_t, r_t, s_{t+1} \sim \mathcal{D}} \left[ \left\| Q_{\phi_1}(s_t, a_t) - y_t \right\|^2 + \left\| Q_{\phi_2}(s_t, a_t) - y_t \right\|^2 \right] \tag{3},$$

with

$$y_t = r_t + \gamma \mathbb{E}_{x_i \sim \pi^{\text{loc}}, a_i^m \sim \pi^{\text{m}}} \left[ Q_\phi \left( f_i(s_{t+1}, a_i^m) \right) - \alpha \log \pi_{\theta,i}(x_i, a_i^m \mid s) \right] \tag{4}.$$

Thus, both, the actor loss value, $L_{\text{actor}}(\theta)$, as well as the critic loss value, $L_{\text{critic}}(\phi)$, may be determined using the location policy's entropy $\alpha_1 \log \pi_i^{\text{loc}}(x_i \mid s)$ and the motion parameter's entropy $\alpha_2 \log \pi_i^{\text{m}}(a_i^m \mid s)$.

This ensures an exploration of the discrete actions (such as contacting the object at a contact point) as well as of the continuous actions (such as moving the contacted object) during reinforcement learning. Illustratively, the method 200 allows for an entropy maximization of both, discrete as well as continuous actions.

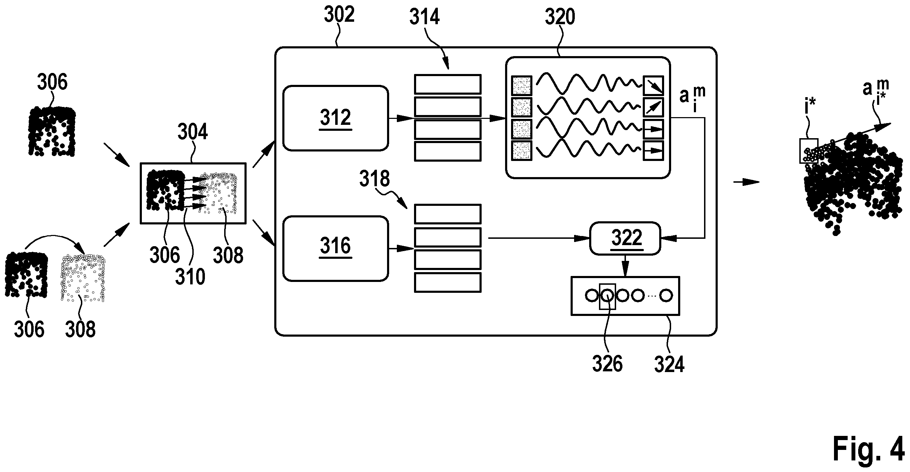

In a second exemplary configuration, as shown in FIG.4, the actor 320 may be based on a diffusion probabilistic model (short: diffusion model). This diffusion-based HySAC may be referred to as Diff-HySAC. The diffusion model may provide the motion parameter policy, $\pi^m$. The diffusion model may be configured to determine (e.g., predict) the respective (continuous) motion parameter, $a_i^m$, as a denoising sequence of consecutive motion parameters (according to probability distribution $p_\theta$). Thus, the motion parameter policy, $\pi^m$, may be given by equation (5):

$$\pi^m(a^m \mid s) = p_\theta(a^{m,0:K} \mid s) = \mathcal{N}(a^{m,K}; 0, I) \prod_{k=1}^K p_\theta(a^{m,k-1} \mid a^{m,k}, s) \tag{5},$$

with $a^{m,k}$ being the motion parameter map $a^m$ at denoising step $k$, $a^0$ is the motion parameter (action) sampled at the final denoising step 0, and is the RL action, e.g., reward evaluation $r(s_t, a_t^0)$. The probability distribution $p_\theta$ may be based on Denoising Diffusion Probabilistic Model (DDPM) in which $p_\theta(a^{k-1} \mid a^k, s)$ is a Gaussian with a trainable mean $\mu(a^k, k; s)$ and a fixed time-dependent covariance $\Sigma(a^k, k; s) = \beta^k I$.

The (per-point) actor loss term, $J_i(\theta)$, of the total objective of the actor 320 of equation (2) may then be determined by:

$$J_i(\theta) = -Q_\phi(f_i, a^{m,0}) + \alpha_1 \log \pi_i^{\text{loc}}(x_i \mid s) + \alpha_2 \sum_{k=0}^K \log p_\theta(a_t^{k-1} \mid a_t^k, k, s) \tag{6}.$$

The gradient may be determined using the chain rule through the softmax of $Q$ of the location policy as given by equation (1) (and the reparameterization trick as the parameteriza-tion of diffusion policy may be Gaussian).

The critic loss value, $L_{\text{critic}}(\phi)$, may be determined using equation (3) with

$$y_t = r_t + \gamma \mathbb{E}\left[Q_\phi\left(f_i\big(s_{t+1}, a_i^{m,0}\big) - \alpha_1 \log \pi_i^{\mathrm{loc}}(x_i \mid s_{t+1}) - \alpha_2 \sum_{k=1}^{K} \log p_\theta\big(a_t^{k-1} \mid a_t^k, k, s_{t+1}\big)\right)\right]$$

$$(7).$$

Given an offline dataset $\mathcal{D} = \{s_t, a_t^0, r_t, s_{t+1}\}_{t=0:T}$ , the objective of the critic loss, $L_{\mathrm{critic}}(\phi)$, may be

$$L_{\mathrm{critic}}(\phi) = \mathbb{E}_{s_t, a_t^0, r_t \sim \mathcal{D}}\left[\big\|y_t - Q_{\phi_1}(s_t, a_t^0)\big\|^2 + \big\|y_t - Q_{\phi_2}(s_t, a_t^0)\big\|^2\right].$$

According to various aspects, variance learning of the diffusion model may be employed to determine a respective variance for each motion parameter, $a^{m,k}$, of the denoising sequence. The weights $\alpha_1$, $\alpha_2$ may be adapted using the respective variance. This allows to adapt the exploration with respect to an uncertainty of the motion policy, thereby further improving the exploration behavior during reinforcement learning.

An exemplary implementation of method 200 for both, HySAC and Diff-HySAC, is given in algorithm 1. Optionally, algorithm 1 may further include that the weights $\alpha_1$, $\alpha_2$ are adapted using the variance as detailed herein (e.g., when updating the critic 322 and the actor 320).

---

___
Algorithm 1: HySAC / Diff-HySAC

---

___

1:  Initialize policy $\pi_\theta$ ($\pi^m$ and $\pi^{loc}$) and critic $Q_\phi$ (e.g., $Q_{\phi_1}$ and $Q_{\phi_2}$)

2:  Initialize the target critic $Q_{\phi'}$ (e.g., $Q_{\phi'_1}$ and $Q_{\phi'_2}$)

3:  Initialize replay buffer: $\mathcal{D} = \emptyset$

4:  **while** not converge **do**

5:  Forward the at least one encoder 312, 316 to compute features $f = f(s_t) = \{(f_i) \mid i = 1 \ldots N\}$

6:  Determine motion parameter map $\boldsymbol{a}^m = \{\boldsymbol{a}_i^m = \pi^m(f_i) \mid i = 1 \ldots N\}$ (according to equation (5) in the case of Diff-HySAC)

7:  Determine critic map $Q = \{Q_i = Q_\phi(f_i, \boldsymbol{a}_i^m) \mid i = 1 \ldots N\}$

8:  Select point, $i^*$, 326 (e.g., according to equation (1))

9:  Select the motion parameter $\boldsymbol{a}_{i*}^m$ associated with the selected point $i^*$

10:  Execute action $(x_{i*}, \boldsymbol{a}_t^0)$ and observe $r_t$ and $s_{t+1}$

11:  Add sample $\{s_t, (x_i, \boldsymbol{a}_{t,i}^0), r_t, \boldsymbol{a}_{t+1}^0\}$ to replay buffer $\mathcal{D}$

12:  Sample a minibatch $\{s, (x_i, \boldsymbol{a}_{t,i}^0), r_t, s'\}$ from $\mathcal{D}$

13:  Update the critic 322 using equation (3) (with $y_t$ defined equation (4) in the case of HySAC and by equation (7) in the case of Diff-HySAC)

14:  Update the actor 320 using equation (2)

15:  Update the target critic $Q_{\phi'}$ (e.g., using standard delayed updates like in SAC)

16:  **end while**

17:  return converged policy $\pi$.

---

___

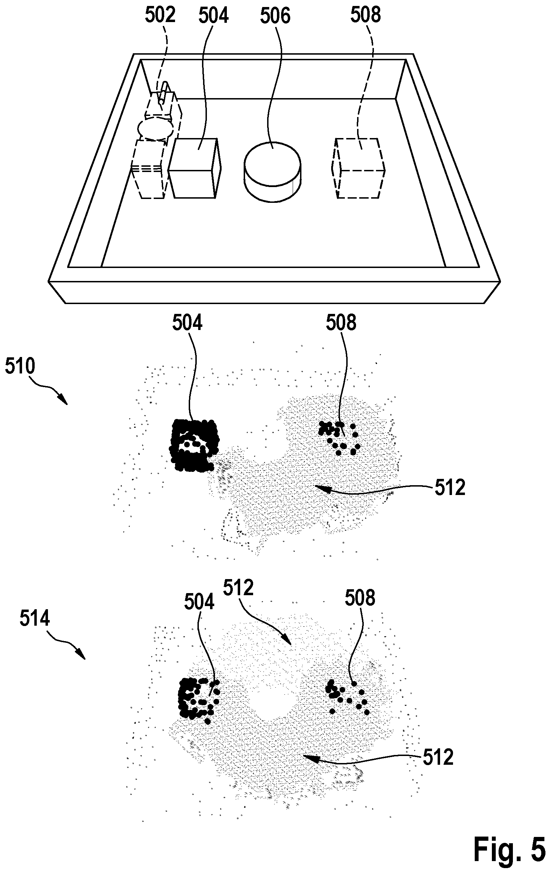

Using the diffusion model allows to learn diverse behaviors (by means of diverse policies), thereby improving skill transfer and/or generalization to out-of-distribution scenarios and (during training) unseen objects. **FIG.5** shows an exemplary use case of the learned soft actor-critic robot control model. In this case, the robotic device may have an end-effector that is capable to push an object 504 on a table-top setting. The task of the robotic device may be to push the object 504 to a target location 508. There is an obstacle 506 between the object 504 and the target location 508.

Illustration 510 shows a plurality of trajectories (given by contact location and corresponding motion parameter) 512 determined using the learned actor-critic robot control model 302 when learned as HySAC and illustration 514 shows the plurality of trajectories 512 determined using the learned actor-critic robot control model 302 when learned as Diff-HySAC. This illustratively shows that in the case of HySAC, the policy consistently provides trajectories that move the object 504 around one side of the obstacle 506 (viz. the policy collapses to one direction), whereas in the case of Diff-HySAC, the policy learns a diverse behavior and provides trajectories around both sides of the obstacle 506. This learning of the diverse policy may improve skill transfer and/or generalization to out-of-distribution scenarios significantly.

While in the above embodiments, the approach of FIG.2 is applied to control the robot arm 120, it may be applied for computing a control signal for controlling any technical system in a scenario where non-prehensile object manipulation plays a role. It is understood although the robotic device 101 is shown to be able for prehensile object manipulation, the approach of FIG.2 can be applied to technical system capable of non-prehensile object manipulation only.

**Claims**

1. A method (200) of reinforcement learning of a soft actor-critic robot control model (302) for manipulation of an object, the method (200) comprising:

   • receiving (202) data (304) representing a point cloud (306) which represents a surrounding of a robotic device (101), wherein a plurality of points of the point cloud represents the object, the data (304) further representing a target location (308) of the object;
   • for each point of the plurality of points:

      ○ determining (204A), using a motion parameter policy of an actor (320) of the soft actor-critic robot control model (302), a respective motion parameter indicating how to move the object when being contacted at the point,
      ○ determining (204B), using the respective motion parameter and one or more state-action value functions of a critic of the soft actor-critic robot control model (302), a respective state-action value indicating a predicted reward when moving the object from the point according to the respective motion parameter,
      ○ determining (206C), using the respective state-action value and a location policy of the actor, a respective probability that the object is to be contacted at the point by the robotic device (101);

   • determining a reward in response to controlling the robotic device (101) to contact the object at the point of the plurality of points having the greatest respective probability and moving the object in accordance with the respective motion parameter associated with this point;
   • determining an actor loss value using the respective state-action value, an entropy of the motion parameter policy, and an entropy of the location policy at each point of the plurality of points;
   • adapting the motion parameter policy and the location policy using the actor loss value;
   • determining a critic loss value using the reward, the entropy of the motion parameter policy, and the entropy of the location policy at each point of the plurality of points; and
   • adapting the one or more state-action value functions of the critic using the second loss value.

2. The method (200) according to claim 1,
   wherein a diffusion model provides the motion parameter policy, the diffusion model being configured to determine the respective motion parameter as a denoising sequence of consecutive motion parameters.

3. The method (200) according to claim 2,
   wherein the entropy of the motion parameter policy at a respective point of the plurality of points is determined as a sum of respectively determined entropies of each motion parameter of the denoising sequence of consecutive motion parameters.

4. The method (200) according to claim 2 or 3,

   wherein the diffusion model is configured to determine a respective variance for each motion parameter of the denoising sequence of consecutive motion parameters;
   wherein, when determining the actor loss value and/or the critic loss value, the entropy of the motion parameter policy is weighted according to a weight coefficient; wherein the method (200) further comprises:

   • adapting the weight coefficient using the respective variance of each motion parameter of the denoising sequence of consecutive motion parameters.

5. The method (200) according to any one of claims 1 to 4,
   wherein the actor loss value decreases with increasing entropy of the motion parameter policy and increasing entropy of the location policy; and/or wherein the critic loss value decreases with increasing entropy of the motion parameter policy and increasing entropy of the location policy.

6. The method (200) according to any one of claims 1 to 5,
   wherein the actor loss value and/or the critic loss value are determined using a sum of the entropy of the motion parameter policy and the entropy of the location policy at each point of the plurality of points.

7. A robot device controller (106) configured to carry out the method (200) of any one of claims 1 to 6.

8. A robot device, comprising:

   • the robot device controller (106) according to claim 7; and
   • at least one perception sensor (113) configured to acquire the data (304) representing the point cloud (306).

9. A computer program comprising instructions which, when executed by a computer, causes the computer to carry out the method (200) according to any one of claims 1 to 6.

10. A computer-readable medium comprising instructions which, when executed by a computer, causes the computer to carry out the method (200) according to any one of claims 1 to 6.

**Amended claims in accordance with Rule 137(2) EPC.**

1. A computer-implemented method (200) of reinforcement learning of a soft actor-critic robot control model (302) for non-prehensile manipulation of an object, the method (200) comprising:

   • receiving (202) data (304) representing a point cloud (306) which represents a surrounding of a robotic device (101), wherein a plurality of points of the point cloud represents the object, the data (304) further representing a target location (308) of the object;
   • for each point of the plurality of points:

     ◦ determining (204A), using a motion parameter policy of an actor (320) of the soft actor-critic robot control model (302), a respective motion parameter indicating how to move the object when being contacted at the point,
     ◦ determining (204B), using the respective motion parameter and one or more state-action value functions of a critic of the soft actor-critic robot control model (302), a respective state-action value indicating a predicted reward when moving the object from the point according to the respective motion parameter,
     ◦ determining (206C), using the respective state-action value and a location policy of the actor, a respective probability that the object is to be contacted at the point by the robotic device (101);

   • determining a reward in response to controlling the robotic device (101) to contact the object at the point of the plurality of points having the greatest respective probability and moving the object in accordance with the respective motion parameter associated with this point;
   • determining an actor loss value using the respective state-action value, an entropy of the motion parameter policy, and an entropy of the location policy at each point of the plurality of points, wherein a diffusion model provides the motion parameter policy, the diffusion model being configured to determine the respective motion parameter as a denoising sequence of consecutive motion parameters;
   • adapting the motion parameter policy and the location policy using the actor loss value;
   • determining a critic loss value using the reward, the entropy of the motion parameter policy, and the entropy of the location policy at each point of the plurality of points; and
   • adapting the one or more state-action value functions of the critic using the critic loss value.

2. The method (200) according to claim 1,
   wherein the entropy of the motion parameter policy at a respective point of the plurality of points is determined as a sum of respectively determined entropies of each motion parameter of the denoising sequence of consecutive motion parameters.

3. The method (200) according to claim 1 or 2,
   wherein the diffusion model is configured to determine a respective variance for each motion parameter of the denoising sequence of consecutive motion parameters; wherein, when determining the actor loss value and/or the critic loss value, the entropy of the motion parameter policy is weighted according to a weight coefficient; wherein the method (200) further comprises:

   • adapting the weight coefficient using the respective variance of each motion parameter of the denoising sequence of consecutive motion parameters.

4. The method (200) according to any one of claims 1 to 3,
   wherein the actor loss value decreases with increasing entropy of the motion parameter policy and increasing entropy

EP 4 706 901 A1

of the location policy; and/or wherein the critic loss value decreases with increasing entropy of the motion parameter policy and increasing entropy of the location policy.

5. The method (200) according to any one of claims 1 to 4,
wherein the actor loss value and/or the critic loss value are determined using a sum of the entropy of the motion parameter policy and the entropy of the location policy at each point of the plurality of points.

6. A robot device controller (106) configured to carry out the method (200) of any one of claims 1 to 5.

7. A robot device, comprising:

  • the robot device controller (106) according to claim 6; and
  • at least one perception sensor (113) configured to acquire the data (304) representing the point cloud (306).

8. A computer program comprising instructions which, when executed by a computer, causes the computer to carry out the method (200) according to any one of claims 1 to 5.

9. A computer-readable medium comprising instructions which, when executed by a computer, causes the computer to carry out the method (200) according to any one of claims 1 to 5.

Fig. 1

200

```
           ┌─────────────┐
           │     202     │
           └─────────────┘
                  │
                  ▼
     ┌──────────────────────────┐
     │    ┌──────────────┐      │
     │    │     204A      │      │
     │    └──────────────┘      │
     │           │              │
     │           ▼              │ ～204
     │    ┌──────────────┐      │
     │    │     204B      │      │
     │    └──────────────┘      │
     │           │              │
     │           ▼              │
     │    ┌──────────────┐      │
     │    │     204C      │      │
     │    └──────────────┘      │
     └──────────────────────────┘
                  │
                  ▼
           ┌─────────────┐
           │     206     │
           └─────────────┘
                  │
                  ▼
           ┌─────────────┐
           │     208     │
           └─────────────┘
                  │
                  ▼
           ┌─────────────┐
           │     210     │
           └─────────────┘
                  │
                  ▼
           ┌─────────────┐
           │     212     │
           └─────────────┘
                  │
                  ▼
           ┌─────────────┐
           │     214     │
           └─────────────┘
```

Fig. 2

Fig. 3

Fig. 4

Fig. 5

Europäisches
Patentamt

European
Patent Office

Office européen
des brevets

# EUROPEAN SEARCH REPORT

**Application Number**

EP 24 19 8635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WENXUAN ZHOU ET AL: "HACMan: Learning Hybrid Actor-Critic Maps for 6D Non-Prehensile Manipulation", ARXIV.ORG, CORNELL UNIVERSITY LIBRARY, 201 OLIN LIBRARY CORNELL UNIVERSITY ITHACA, NY 14853, 5 November 2023 (2023-11-05), XP091652172, | 1,7-10 | INV. B25J9/16 |
| A | * abstract * <br> * Section 5 * | 2-6 | |
| Y | RIOU KEVIN ET AL: "Reinforcement Learning Based Point-Cloud Acquisition and Recognition Using Exploration-Classification Reward Combination", 2022 IEEE INTERNATIONAL CONFERENCE ON MULTIMEDIA AND EXPO (ICME), IEEE, 18 July 2022 (2022-07-18), pages 1-6, XP034176272, DOI: 10.1109/ICME52920.2022.9859968 [retrieved on 2022-08-26] | 1,7-10 | |
| A | * abstract * <br> * Section 2. * | 2-6 | **TECHNICAL FIELDS SEARCHED (IPC)** <br> B25J |
| Y | FELDMAN ZOHAR ET AL: "A Hybrid Approach for Learning to Shift and Grasp with Elaborate Motion Primitives", 2022 INTERNATIONAL CONFERENCE ON ROBOTICS AND AUTOMATION (ICRA), IEEE, 23 May 2022 (2022-05-23), pages 6365-6371, XP034146516, DOI: 10.1109/ICRA46639.2022.9811735 [retrieved on 2022-07-12] | 1,7-10 | |
| A | * abstract * <br> * Section III * | 2-6 | |
| | -/-- | | |

The present search report has been drawn up for all claims

| Place of search | Date of completion of the search | Examiner |
|---|---|---|
| Munich | 21 February 2025 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 24 19 8635

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AYZAAN WAHID ET AL: "Learning Object-conditioned Exploration using Distributed Soft Actor Critic", ARXIV.ORG, 30 July 2020 (2020-07-30), XP081728717, | 1,7-10 | |
| A | * abstract * <br> * Section 7. * <br> ----- | 2-6 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 21 February 2025 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. ZHOU et al.** HACMan: Learning hybrid actor-critic maps for 6d non-prehensile manipulation. *7th Conference on Robot Learning (CoRL*, 2023

- **Z. FELDMAN et al.** A hybrid approach for learning to shift and grasp with elaborate motion primitives. *International Conference on Robotics and Automation (ICRA)*, 2022